# EUROPEAN PATENT SPECIFICATION

(11) **EP 4 544 195 B1**
(45) Date of publication and mention of the grant of the patent: **15.04.2026**
(21) Application number: 23737896.3
(22) Date of filing: 16.06.2023
(51) Int. Cl.: F04F 5/04, F04F 5/10, F04F 5/12, F04F 5/46

(54) **A MULTI-STAGE VENTURI-TYPE APPARATUS, LIQUID TREATMENT SYSTEM, AQUAFARM, AND METHOD FOR TREATING LIQUID IN A TANK**
MEHRSTUFIGE VENTURI-VORRICHTUNG, FLÜSSIGKEITSBEHANDLUNGSSYSTEM, AQUAFARM UND VERFAHREN ZUR BEHANDLUNG VON FLÜSSIGKEIT IN EINEM TANK
APPAREIL DE TYPE VENTURI À ÉTAGES MULTIPLES, SYSTÈME DE TRAITEMENT DE LIQUIDE, FERME AQUACOLE ET PROCÉDÉ DE TRAITEMENT DE LIQUIDE DANS UN RÉSERVOIR

(30) Priority: 21.06.2022 NO 20220710
(43) Date of publication of application: 30.04.2025
(73) Proprietor: Norrde AS, 8907 Brønnøysund (NO)
(72) Inventor: KROKNES, Morten, 8907 Brønnøysund (NO); KVALØ, Ronald, 8920 Sømna (NO)
(74) Representative: Lincoln IP
(86) International application number: PCT/EP2023/066338
(87) International publication number: WO 2023/247381

(56) References cited:
- DE-C- 855 656
- JP-A- S63 289 300
- US-A1- 2015 285 271
- US-A1- 2018 133 621
- US-B1- 11 130 100

## Description

The present invention relates to apparatus, systems, and methods for aquafarm operations, in particular for the transportation and/or treatment of liquids.

### Background to the Invention

In the field of aquafarming (also known as aquaculture) aquatic organisms such as fish, crustaceans, molluscs, algae are controllably farmed. Typically, this takes place in a water tank. During cultivation of the organisms, gases, particularly nitrogen and carbon dioxide, are released into the water and dissolved, saturating the water. Nitrogen is generated during heating of the water, and carbon dioxide is generated by the organisms themselves. There is a need to remove these dissolved gases from the water in the tank.

In the art, there are three ways in which this is typically achieved. Using a fish tank as an example, the first is to transfer the saturated water from the fish tank into a separate water tank, lift the water to a defined height above the water level in the fish tank, then drop the water through a sieve and allow the water run naturally back into the fish tank. The second is to transfer the saturated water from the fish tank into a separate water tank, and then inject pressurized air into the body of water. Subsequently, the water is pumped back into the fish tank. The third is to pump the saturated water from the fish tank into a separate water tank, through an ejector, and then back into the fish tank. Typically, there is minimal height difference between the water tank and fish tank water level.

However, all these methods require pumps, which are very energy intensive. This pump usage is estimated to be approximately two thirds of the energy consumption of a fish farm. Thus, there is a need to reduce energy consumption of this process, particularly with respect to the use of pumps. Additionally, a leak in the pump can cause severe nitrogen saturation, which represents a safety issue. Thus, there is a need to improve the safety of the process.

Eductors and ejectors (collectively referred to as venturi-type apparatus) are known generally in the art for water treatment applications. Both are based on the Bernoulli Principle that when the speed of a fluid increases its pressure decreases, and vice versa.

In a typical venturi-type apparatus, a motive fluid (also termed a working fluid and may be a liquid or gas) flows through a jet nozzle into a tube. The tube narrows in cross-sectional area. As a result of this structure and the Bernoulli Principle, the fluid velocity is increased and thus the pressure is reduced. This generates a vacuum, which is capable of drawing in a fluid from a further opening or inlet (also termed entraining).

US2005061378 describes a multi-stage eductor apparatus including a first stage eductor with an inlet, an outlet, and a venturi throat between the inlet and outlet into which a driving fluid is injected to flow from the outlet and create a suction at the inlet for drawing material into the inlet and through the first stage eductor with the driving fluid, and at least a second stage eductor of the same or similar configuration, with the inlet of the second stage eductor connected directly to the outlet from the first stage eductor.

However, this multi-stage eductor apparatus is only designed for use with liquids, with a mere passing reference to the motive fluid being a natural gas.

JPS63289300 describes a hydrokinetic amplifier. DE855656 describes a method and device for conveying hot liquids by steam.

### Summary of the Invention

There is generally a need for an apparatus, system and method which addresses one or more of the problems identified above.

It is amongst the aims and objects of the invention to provide an apparatus, system, and method for transporting and/or treating liquid, and which obviates or mitigates one or more drawbacks or disadvantages of the prior art.

Further aims and objects of the invention will become apparent from reading the following description.

According to a first aspect of the invention, there is provided a liquid treatment system, comprising a multi-stage venturi-type apparatus and ventilation means for releasing gas from the apparatus, the multi-stage venturi-type apparatus comprising
a venturi-type eductor having a longitudinal axis, a first eductor inlet configured to receive a liquid flow, a second eductor inlet configured to receive a liquid flow; and an eductor outlet in fluid communication with the first eductor inlet and second eductor inlet; and
a venturi-type ejector having a longitudinal axis, a first ejector inlet, a second ejector inlet configured to receive a gaseous flow, and an ejector outlet in fluid communication with the first ejector inlet and second ejector inlet,
wherein the first ejector inlet is connected to the eductor outlet forming a passageway for the flow of fluid from the venturi-type eductor into and through the venturi-type ejector.

While ejectors are known in the art for aerating water, they require external (electric) pumps. By exploiting the pumping effect of the eductor, the inventors of the present invention have surprisingly found that the apparatus can transport a relatively large amount of low-pressure liquid without the need to use external (electric) pumps, thus lowering the energy requirement, reducing the space required, and improving the safety.

Additionally, the apparatus is advantageously able to remove dissolved gases in the same process. The combination of a connected eductor and ejector for the purpose of transporting a liquid and simultaneously removing dissolved gases has not hitherto been realised in the art.

In some preferred embodiments, instead of using an external (electric) pump, the inventors have surprisingly found that the existing water pressure from an aquafarm water source can be used as the motive fluid to induce the pumping effect of the eductor. This advantageously decreases the energy consumption of an aquafarm.

For the avoidance of doubt, in some embodiments, the apparatus can be used in conjunction with an external pump.

In this context, an "eductor" should be construed as any venturi-type apparatus which is configured to receive at least an inlet flow of liquid, and an "ejector" should be construed as any venturi-type apparatus which is configured to receive at least an inlet flow of gas.

Preferably, the first eductor inlet is configured to receive a motive fluid. In these embodiments, the motive fluid is a liquid. Preferably, the motive fluid is water.

Preferably, the second eductor inlet is configured to receive liquid, preferably water, from an aquafarm, such as from a fish tank in an aquafarm. In some embodiments, the water is saturated. In some embodiments, the water is saturated with one or both of nitrogen and carbon dioxide.

Preferably, the second ejector inlet is configured to receive an air flow. The air flow preferably originates from an air source, for example a tank, a cylinder or, most preferably, the atmosphere.

The first ejector inlet is preferably directly connected to the eductor outlet.

The longitudinal axes of the eductor and the ejector may be in coaxial alignment.

The first eductor inlet may be centred on the longitudinal axis of the eductor.

The eductor outlet may be in coaxial alignment with the first eductor inlet.

The first ejector inlet may be centred on the longitudinal axis of the ejector.

The ejector outlet may be in coaxial alignment with the first ejector inlet.

The second eductor inlet is preferably positioned at an angle to the first eductor inlet. The second eductor inlet may be substantially perpendicular to the first eductor inlet.

The second ejector inlet is preferably positioned at an angle to the first ejector inlet. The second ejector inlet may be substantially perpendicular to first ejector inlet.

One or more of the inlets may comprise a nozzle. Preferably, the first eductor inlet comprises a nozzle and/or the first ejector inlet comprises a nozzle.

The apparatus may comprise a plurality of venturi-type ejectors, connected in series. This advantageously allows for gaseous flows to be entrained into the apparatus from a plurality of sources.

The inventors of the present invention have surprisingly found the liquid treatment system to be particularly effective at removing dissolved gasses (such as nitrogen and carbon dioxide) from a liquid and aerating the liquid.

The ventilation means may comprise a gas outlet. The gas outlet may comprise a valve, to control the rate of flow of gas out the gas outlet.

Alternatively, or additionally, the ventilation means may comprise a vacuum chamber. In these embodiments, fluid exiting the ejector outlet is subjected to a vacuum, which actively removes dissolved gases from the fluid. The vacuum chamber is connectable to a vacuum source. In some embodiments, the vacuum chamber is connected to a vacuum source. The vacuum source may be, for example, a vacuum pump; a high-speed fan; a mechanical pump; and/or an ejector.

The system may comprise an outer casing enclosing the apparatus. The outer casing may have a cylinder shape, preferably a hexagonal cylinder shape.

The system may comprise a gas inlet conduit in fluid communication with the second ejector inlet.

The system may comprise a first liquid inlet conduit in fluid communication with the first eductor inlet, and/or a second liquid inlet conduit in fluid communication with the second eductor inlet.

In this context "conduit" should be construed as any suitable means for conveying a liquid and includes, for example, a tube, a pipe, or a hose.

The system may comprise an oxygen cone, preferably in fluid communication with the first liquid inlet conduit and/or the liquid outlet conduit.

In use, the apparatus may be vertically orientated along the longitudinal axis. The apparatus may be orientated such that the first eductor inlet is below the ejector outlet. In other words, the apparatus may be orientated such that fluid flows upwards through the apparatus.

The system may comprise a plurality of apparatus. The apparatus may be connected in series. Alternatively, the apparatus may be connected in parallel. Alternatively, the apparatus may be connected in a combination of series and parallel.

Preferably, the system is absent of any pumps. In other words, the system optionally does not comprise a pump. In some embodiments, the vacuum source may be an ejector having compressed air as the motive fluid (which together generate a vacuum). In some embodiments, the vacuum source may be an ejector having, as the motive fluid, pressurised water from the aquafarm water source. These embodiments advantageously remove all need for any (mechanical) pumps in the system.

Alternatively, the system may comprise only a vacuum pump, and be absent of any pumps suitable for transporting liquid. Alternatively, or additionally, the system comprises an external pump, preferably for providing liquid to the first eductor inlet.

According to a second aspect of the invention, there is provided an aquafarm comprising at least one tank and at least one liquid treatment system according to the first aspect of the invention in fluid communication with the tank.

In this context, "tank" should be construed broadly to encompass any artificial facility suitable for aquafarming and includes, but is not limited to, a fish tank, a pond, an aquaponic or a raceway.

The tank is preferably in fluid communication with the second eductor inlet and the ejector outlet.

Each tank may comprise at least one liquid treatment system. Each tank may comprise a plurality of liquid treatment systems.

Alternatively, each liquid treatment system may be in fluid communication with a plurality of tanks.

Preferably, the aquafarm is a fish farm. Alternatively, or additionally, the aquafarm may farm one or more of crustaceans, molluscs, and algae. Aquafarming includes fish farming, shrimp farming, oyster farming, mariculture, pisciculture, and algaculture.

Embodiments of the second aspect of the invention may include one or more features of the first aspect of the invention or its embodiments, or vice versa.

Also described is a use of a multi-stage venturi-type apparatus for transporting a liquid.

According to a third aspect of the invention, there is provided a use of a liquid treatment system according to the first aspect of the invention for treating a liquid.

Embodiments of the third aspect of the invention may include one or more features of the first or second aspects of the invention or their embodiments, or vice versa.

Also described is a method for transporting a liquid from a tank, comprising the steps of:
a. providing a multi-stage venturi-type apparatus;
b. flowing liquid from a liquid source into the first eductor inlet;
c. entraining liquid from the tank into the second eductor inlet;
d. optionally entraining gas from a gas source into the second ejector inlet; and
e. flowing liquid out of the ejector outlet.

As above, "tank" should be construed broadly to encompass any artificial facility suitable for aquafarming and includes, but is not limited to, a fish tank, a pond, an aquaponic or a raceway.

According to a fourth aspect of the invention, there is provided a method for treating liquid in a tank, comprising the steps of:
a. providing a liquid treatment system according to the first aspect of the invention;
b. flowing liquid from a liquid source into the first eductor inlet, wherein the pressure of the liquid from the liquid source is greater than the pressure of the liquid inside the tank;
c. entraining liquid from the tank into the second eductor inlet;
d. entraining air from an air source into the second ejector inlet; and
e. flowing liquid from the ejector outlet to the tank.

As above, "tank" should be construed broadly to encompass any artificial facility suitable for aquafarming and includes, but is not limited to, a fish tank, a pond, an aquaponic or a raceway.

The method for treating liquid in a tank of the present invention advantageously takes saturated liquid from a tank and treats it to both remove dissolved gases and aerate the liquid, without the need for any external (electric) pumps.

The liquid from the tank may comprise a greater amount of dissolved nitrogen and/or carbon dioxide as compared to water prior to use in the tank.

Embodiments of the fourth aspect of the invention may include one or more features of the first to third aspects of the invention or their embodiments, or vice versa.

### Brief Description of the Drawings

There will now be described, by way of example only, various embodiments of the invention with reference to the drawings, of which:
Figure 1 is a schematic representation of a multi-stage venturi-type apparatus in accordance with an embodiment of the invention;
Figure 2 is a schematic representation of a liquid treatment system in accordance with an embodiment of the invention;
Figure 3 is a schematic representation of a liquid treatment system in accordance with an embodiment of the invention;
Figure 4 is a schematic representation of a liquid treatment system in accordance with an embodiment of the invention;
Figure 5 is a perspective view of the liquid treatment system in Figure 4;
Figure 6 is a perspective view of an aquafarm in accordance with an embodiment of the invention; and
Figure 7 is a flow diagram of a method for treating liquid in a tank in accordance with an embodiment of the invention.

In the description which follows, like parts are marked throughout the specification and drawings with the same reference numerals. The drawings are not necessarily to scale and the proportions of certain parts have been exaggerated to better illustrate details and features of embodiments of the invention.

### Detailed Description of the Preferred Embodiments

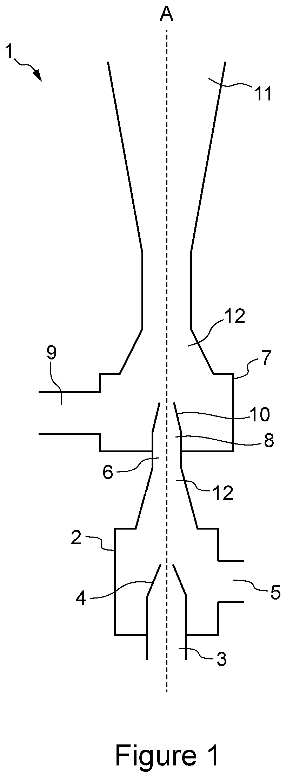

An explanation of the present invention will now be described with reference to Figures 1 to 7.

Referring firstly to Figure 1, there is shown generally at 1 a multi-stage venturi-type apparatus. The apparatus 1 comprises a venturi-type eductor 2 having a longitudinal axis A. The eductor 2 comprises a first eductor inlet 3 which is configured to receive a liquid flow. The first eductor inlet has a nozzle 4. The eductor 2 also comprises a second eductor inlet 5 which is configured to receive a liquid flow. Preferably, the liquid flow entering the first eductor inlet 3 is from a different source to that entering the second eductor inlet 5. The eductor 2 further comprises an eductor outlet 6 which in fluid communication with both the first eductor inlet 3 and the second eductor inlet 5.

In addition to the eductor 2, the apparatus 1 comprises a venturi-type ejector 7 also having the longitudinal axis A. The ejector 7 comprises a first ejector inlet 8, and a second ejector inlet 9 which is configured to receive a gaseous flow. The first ejector inlet 8 has a nozzle 10. The ejector 7 also comprises an ejector outlet 11 which is in fluid communication with both the first ejector inlet 8 and the second ejector inlet 9.

The first ejector inlet 8 is connected to the eductor outlet 6 forming a passageway for the flow of fluid from the eductor 2 into and through the ejector 7. Preferably, and as shown in Figure 1, the first ejector inlet 8 is directly connected to the eductor outlet 6, such that no other structure or transporting means (e.g., a conduit) is situated between the eductor outlet 6 and the first ejector inlet 8. However, in alternative embodiments, there may be a conduit between the eductor outlet 6 and the first ejector inlet 8 such that the two are connected, but not directly connected.

Both the eductor 2 and the ejector 7 comprise a section 12 in which the cross-sectional area (perpendicular to the longitudinal axis) narrows. As discussed above, fluid in the narrower section has an increased velocity, and thus a reduced pressure, compared to fluid in the wider section. This reduction in pressure entrains fluid from the second eductor inlet 5 and the second ejector inlet 9 respectively.

In the embodiment show in Figure 1, the longitudinal axes of the eductor 2 and the ejector 7 are in coaxial alignment (i.e., both share the longitudinal axis A).

The first eductor inlet 3 is centred on the longitudinal axis (A) of the eductor 2, and the eductor outlet 6 is in coaxial alignment with the first eductor inlet 3. Additionally, the first ejector inlet 8 is centred on the longitudinal axis (A) of the ejector 7, and the ejector outlet 11 is in coaxial alignment with the first ejector inlet 8.

The second eductor inlet 5 is positioned substantially perpendicular to the first eductor inlet 3, and the second ejector inlet 9 is positioned substantially perpendicular to first ejector inlet 8.

It will be appreciated that various modifications can be made to the eductor and/or the ejector with regard to, for example, the specific size, shape, and arrangement of inlets and/or outlets, all of which would be apparent to the skilled person. Similarly, the length of the eductor and/or ejector, as well as the cross-sectional areas along the longitudinal axes of the eductor and/or ejector, are dependent on the specific application and would also be apparent to the skilled person.

In use, a liquid is provided from a liquid source and flows into the first eductor inlet 3. This liquid flow is termed the motive fluid. Preferably, this liquid is not pumped into the first eductor inlet 3, but instead the liquid may inherently have a relatively high velocity at the point of entering the first eductor inlet 3; for example, the liquid source is in a mountainous region where the liquid is pressured at source.

Due to the Bernoulli Principle, the motive fluid entrains liquid from the second eductor inlet 5 and into the eductor 2. Preferably, the entrained liquid is from, for example, a tank in an aquafarm. The motive fluid and entrained liquid together flow through the eductor 2, out the eductor outlet 6, and into the first ejector inlet 8 (because the eductor outlet 6 is directly connected to the first ejector inlet 8). This combined fluid acts as the motive fluid for the ejector 7, which entrains gas from the second ejector inlet 9 and into the ejector 7. Preferably, the entrained gas is from, for example, an air source. The motive fluid and entrained gas together flow through the ejector 7, and out the ejector outlet 11.

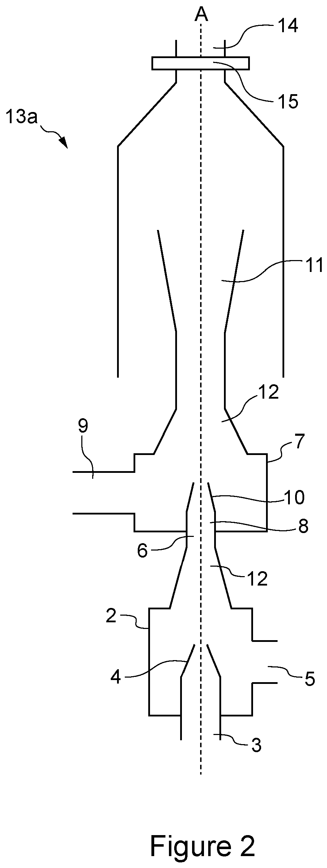

Referring to Figure 2, there is shown generally at 13a a liquid treatment system. The system 13a comprises the multi-stage venturi-type apparatus 1 as shown in Figure 1. The system 13a also comprises ventilation means for releasing gas from the apparatus. In this embodiment, the ventilation means comprises a gas outlet 14. The gas outlet 14 comprises a valve 15 for controlling the release of gas through the gas outlet 14.

In use, the apparatus 1 works in the same way as the embodiment shown in Figure 1. Additionally, the gas outlet 14 permits the release of gas as the fluid exits the ejector outlet 11. The gas may have been present in the liquid prior to entering the apparatus 1 (e.g. dissolved nitrogen or carbon dioxide), and/or be present as an excess of entrained gas through the second ejector inlet 9 (i.e. air that has not dissolved). The valve 15 permits control over the pressure within the apparatus 1.

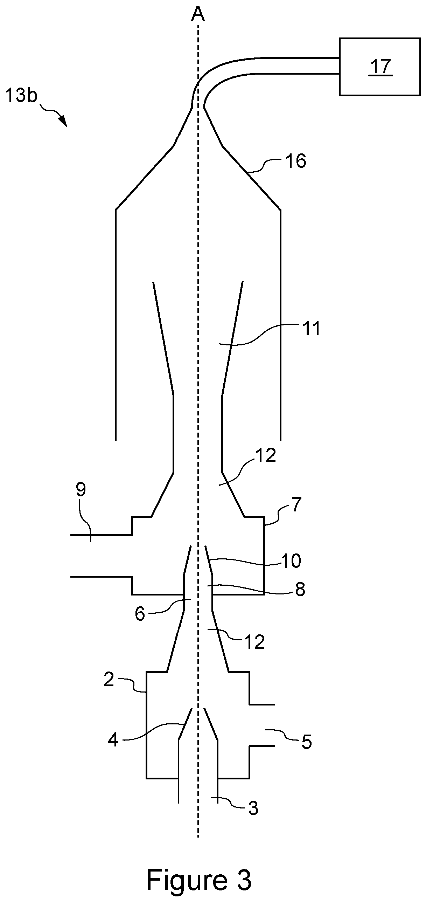

Referring to Figure 3, there is shown generally at 13b a liquid treatment system. The system 13b comprises the multi-stage venturi-type apparatus 1 as shown in Figure 1. The system 13b also comprises ventilation means for releasing gas from the apparatus. In this embodiment, the ventilation means comprises a vacuum chamber 16. The vacuum chamber surrounds the ejector outlet and is connected to a vacuum pump 17. Alternatively, instead of a vacuum pump, one or more of a high-speed fan; a mechanical pump; and an ejector can be used to generate a vacuum.

In use, the apparatus 1 works in the same way as the embodiment shown in Figure 1. Additionally, the vacuum pump 17 actively removes gas as the fluid exits the ejector outlet 11. Thus, this embodiment has an increased efficiency compared to the embodiment shown in Figure 2, which does not have active ventilation means. The gas may have been present in the liquid prior to entering the apparatus 1 (e.g. dissolved nitrogen or carbon dioxide), and/or be present as an excess of entrained gas through the second ejector inlet 9 (i.e. air that has not dissolved).

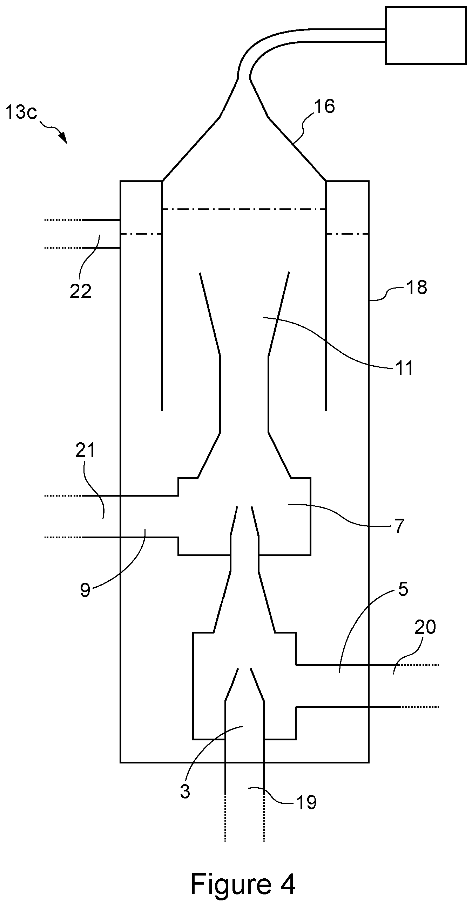

Referring to Figure 4, there is shown generally at 13c a liquid treatment system. The system 13c comprises all the features of the embodiment shown in Figure 3. Additionally, the system 13c comprises an outer casing 18 enclosing the apparatus 1. As can be seen in Figure 4, part of the vacuum chamber 16 extends out of the outer casing 18.

For the avoidance of doubt, while the outer casing 18 is depicted in this embodiment, the outer casing 18 may be used in the liquid treatment system 13 according to any embodiment.

The system 13c additionally comprises a plurality of conduits. Firstly, the system 13c comprises a first liquid inlet conduit 19 which is in fluid communication with the first eductor inlet 3. Secondly, the system 13c comprises a second liquid inlet conduit 20 which is in fluid communication with the second eductor inlet 5. Thirdly, the system 13c comprises a gas inlet conduit 21 which is in fluid communication with the second ejector inlet 9. Finally, the system 13c comprises a liquid outlet conduit 22 which is in fluid communication with the ejector outlet 11. The purpose of the conduits is for connecting the apparatus to various structures (e.g. an aquafarm tank, a liquid source, an air source, etc).

For the avoidance of doubt, while the conduits are only depicted in this embodiment, the conduits may be used in the liquid treatment system 13 according to any embodiment.

In use, the apparatus 1 in Figure 4 works in the same way as the embodiment shown in Figure 3. The dashed line shows the water level inside the system 13c, and particularly inside the vacuum chamber 16. It is desirable for the water level to be maintained inside the system 13c at the height of the liquid outlet conduit 22.

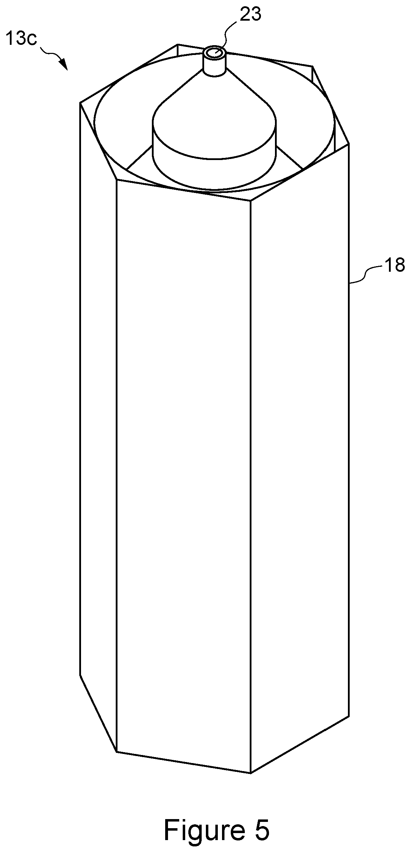

Referring to Figure 5, there is shown a perspective view of part of the liquid treatment system 13c in Figure 4. The embodiment shown has an outer casing 18 with a hexagonal cylinder shape, although it will be appreciated that the outer casing 18 may have any suitable size and shape. Also shown is a vacuum connector 23 for connecting the vacuum chamber 16 to a vacuum pump 17.

The outer casing 18 preferably has openings in suitable positions (not shown) to permit connections (e.g., via an inlet/outlet conduit) with the inlets and/or outlets of the apparatus 1.

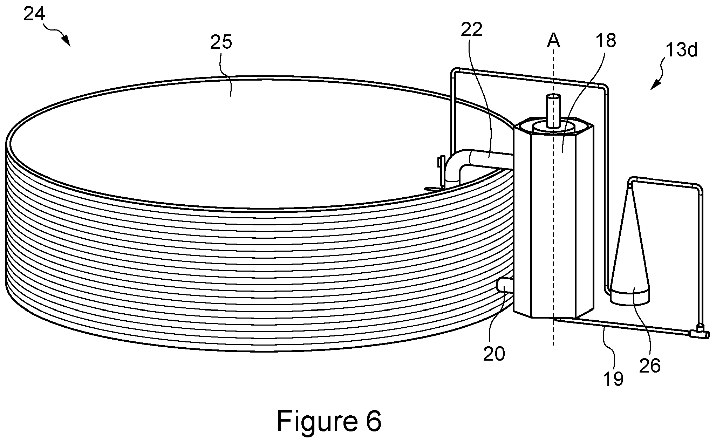

Referring to Figure 6, there is shown generally at 24 an aquafarm. The aquafarm 24 comprises a tank 25 (for aquafarming) and a liquid treatment system 13d in fluid communication with the tank 25. The tank 25 is in fluid communication with the second eductor inlet and the ejector outlet. This is achieved through a second liquid inlet conduit 20 which in fluid communication with the second eductor inlet (not shown), and a liquid outlet conduit 22 which in fluid communication with the ejector outlet (not shown).

The apparatus (not shown because it is enclosed within the outer casing 18) is vertically orientated along the longitudinal axis (A), such that the first eductor inlet 3 is below the ejector outlet 11.

In the embodiment shown in Figure 6, the liquid treatment system 13d comprises an oxygen cone 26. Also known as a Speece cone, the purpose of the oxygen cone 26 is for oxygenating liquid. Due to the conical shape, as liquid enters from the top of the oxygen cone 26, the speed of the liquid will decrease as the diameter of the cone increases. During this slowdown, oxygen gas is introduced to saturate the liquid. An oxygen cone 26 is of particular use in an aquafarm, and especially in a fish farm.

The oxygen cone 26 is in fluid communication with both the first liquid inlet conduit 19 and the liquid outlet conduit 22. The first liquid inlet conduit 19 is in fluid communication with the top of the oxygen cone 26, while the liquid outlet conduit 22 is in fluid communication with the bottom of the oxygen cone 26.

For the avoidance of doubt, while the oxygen cone 26 is only depicted in this embodiment, the oxygen cone 26 may be used in the liquid treatment system 13 according to any embodiment.

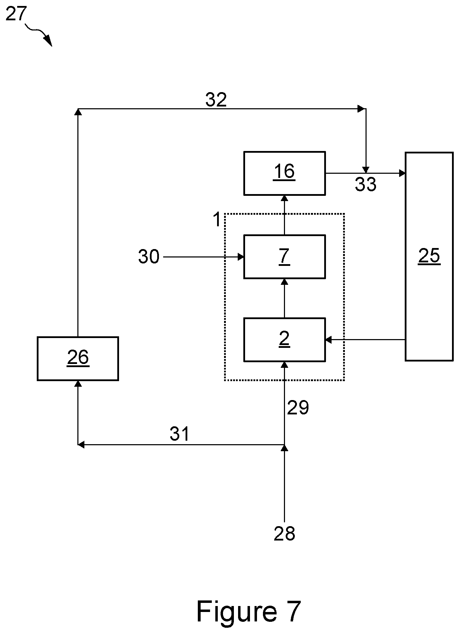

Referring to Figure 7, there is shown generally at 27 a flow diagram of a method for treating liquid in a tank 25, for example a fish tank in an aquafarm.

A liquid source 28 is provided. The pressure of the liquid from the liquid source 28 is greater than the pressure of the liquid inside the tank 25. This greater pressure allows for the apparatus 1 to be used in the absence of any external (electric) pumps.

A first portion 29 of the liquid from the liquid source 28 flows into the eductor 2 through the first eductor inlet 3. As discussed previously, the Bernoulli Principle and the relatively high pressure of portion 29 means that saturated liquid is entrained from the tank 25 into the eductor 2 (through the second eductor inlet 5) and combined with portion 29. This combined portion flows into the ejector 7 and entrains air from an air source 30 into the ejector 7 (through the second ejector inlet 9). All fluid flows are combined and pass through a vacuum chamber 16, in which gases liberated from the saturated liquid (such as nitrogen and carbon dioxide) are removed.

A second portion 31 of the liquid from the liquid source 28 flows to an oxygen cone 26. The oxygen cone 26 oxygenates the liquid to provide an oxygenated liquid flow 32.

The oxygenated liquid flow 32 combines with the fluid flow 33 out of the apparatus 1, and returns to the tank 25 as treated liquid.

It will be appreciated that the oxygen cone is an optional feature, and that the method for treating liquid in a tank can be operated without the oxygen cone. Additionally, it will be appreciated that any ventilation means can be used in the method instead of a vacuum chamber and pump.

The invention provides a multi-stage venturi-type apparatus, liquid treatment system, aquafarm, and method for treating liquid in a tank. The multi-stage venturi-type apparatus comprises a venturi-type eductor having a longitudinal axis, a first eductor inlet configured to receive a liquid flow, a second eductor inlet configured to receive a liquid flow; and an eductor outlet in fluid communication with the first eductor inlet and second eductor inlet; and a venturi-type ejector having a longitudinal axis, a first ejector inlet, a second ejector inlet configured to receive a gaseous flow, and an ejector outlet in fluid communication with the first ejector inlet and second ejector inlet. The first ejector inlet is connected to the eductor outlet forming a passageway for the flow of fluid from the venturi-type eductor into and through the venturi-type ejector. The apparatus can transport and treat a relatively large amount of low-pressure liquid without the need to use external/electric pumps.

Throughout the specification, unless the context demands otherwise, the terms "comprise" or "include", or variations such as "comprises" or "comprising", "includes" or "including" will be understood to imply the inclusion of a stated integer or group of integers, but not the exclusion of any other integer or group of integers. Furthermore, unless the context clearly demands otherwise, the term "or" will be interpreted as being inclusive not exclusive.

The foregoing description of the invention has been presented for purposes of illustration and description and is not intended to be exhaustive or to limit the invention to the precise form disclosed. The described embodiments were chosen and described in order to best explain the principles of the invention and its practical application to thereby enable others skilled in the art to best utilise the invention in various embodiments and with various modifications as are suited to the particular use contemplated. Therefore, further modifications or improvements may be incorporated without departing from the scope of the invention as defined by the appended claims.

## Claims

1. A liquid treatment system (13), comprising a multi-stage venturi-type apparatus (1) and ventilation means (14,16) for releasing gas from the apparatus, the multi-stage venturi-type apparatus (1), comprising
a venturi-type eductor (2) having a longitudinal axis (A), a first eductor inlet (3) configured to receive a liquid flow, a second eductor inlet (5) configured to receive a liquid flow; and an eductor outlet (6) in fluid communication with the first eductor inlet (3) and second eductor inlet (5); and
a venturi-type ejector (7) having a longitudinal axis (A), a first ejector inlet (8), a second ejector inlet (9) configured to receive a gaseous flow, and an ejector outlet (11) in fluid communication with the first ejector inlet (8) and second ejector inlet (9), wherein the first ejector inlet (8) is connected to the eductor outlet (6) forming a passageway for the flow of fluid from the venturi-type eductor (2) into and through the venturi-type ejector (7).

2. The system according to claim 1, wherein the first ejector inlet (8) is directly connected to the eductor outlet (6); and/or
wherein the longitudinal axes (A) of the eductor (2) and the ejector (7) are in coaxial alignment.

3. The system according to claim 1 or claim 2, wherein the first eductor inlet (3) is centred on the longitudinal axis (A) of the eductor (2), optionally wherein the eductor outlet (6) is in coaxial alignment with the first eductor inlet (3).

4. The system according to any preceding claim, wherein the first ejector inlet (8) is centred on the longitudinal axis (A) of the ejector, optionally wherein the ejector outlet (11) is in coaxial alignment with the first ejector inlet (8).

5. The system according to any preceding claim, wherein the ventilation means comprises a vacuum chamber (16); or
wherein the ventilation means comprises a gas outlet (14), optionally comprising a valve (15).

6. The system according to any preceding claim, further comprising an outer casing (18) enclosing the apparatus (1); and/or a gas inlet conduit (21) in fluid communication with the second ejector inlet (9).

7. The system according to any preceding claim, further comprising one or more of a first liquid inlet conduit (19) in fluid communication with the first eductor inlet (3); a second liquid inlet conduit (20) in fluid communication with the second eductor inlet (5); and a liquid outlet conduit (22) in fluid communication with the ejector outlet (11), optionally
wherein the system further comprises an oxygen cone (26) in fluid communication with the first liquid inlet conduit (19) and/or the liquid outlet conduit (22).

8. The system according to any preceding claim, wherein, in use, the apparatus (1) is vertically orientated along the longitudinal axis (A), optionally wherein the apparatus (1) is orientated such that the first eductor inlet (3) is below the ejector outlet (11).

9. The system according to any preceding claim, wherein the system (13) comprises a plurality of apparatus (1), connected in series and/or parallel.

10. An aquafarm (24) comprising at least one tank (25) and at least one liquid treatment system (13) according to any one of claims 1 to 9 in fluid communication with the tank (25).

11. The aquafarm according to claim 10, wherein the tank (25) is in fluid communication with the second eductor inlet (5) and the ejector outlet (11).

12. The aquafarm according to claim 10 or claim 11, wherein each tank (25) comprises at least one liquid treatment system (13), or wherein each liquid treatment system (13) is in fluid communication with a plurality of tanks (25).

13. The aquafarm according to any one of claims 10 to 12, wherein the aquafarm (24) is a fish farm.

14. Use of a liquid treatment system (13) according to any one of claims 1 to 9 for treating a liquid.

15. A method for treating liquid in a tank (25), comprising the steps of:
a. providing a liquid treatment system (13) according to any one of claims 1 to 9;
b. flowing liquid from a liquid source (28) into the first eductor inlet (3), wherein the pressure of the liquid from the liquid source (28) is greater than the pressure of the liquid inside the tank (25);
c. entraining liquid from the tank (25) into the second eductor inlet (5);
d. entraining air from an air source (30) into the second ejector inlet (9); and
e. flowing liquid from the ejector outlet (11) to the tank (25).

## Patentansprüche

1. Ein Flüssigkeitsbehandlungssystem (13), das eine mehrstufige Venturi-Vorrichtung (1) und Belüftungsmittel (14, 16) zum Freisetzen von Gas aus der Vorrichtung umfasst, wobei die mehrstufige Venturi-Vorrichtung (1) Folgendes umfasst
einen Venturi-Eduktor (2) mit einer Längsachse (A), einem ersten Eduktoreinlass (3), der so konfiguriert ist, dass er einen Flüssigkeitsstrom aufnimmt, einem zweiten Eduktoreinlass (5), der so konfiguriert ist, dass er einen Flüssigkeitsstrom aufnimmt, und einem Eduktorauslass (6), der in Fluidverbindung mit dem ersten Eduktoreinlass (3) und dem zweiten Eduktoreinlass (5) steht, und
einen Venturi-Ejektor (7) mit einer Längsachse (A), einem ersten Ejektoreinlass (8), einem zweiten Ejektoreinlass (9), der so konfiguriert ist, dass er einen Gasstrom aufnimmt, und einem Ejektorauslass (11), der in Fluidverbindung mit dem ersten Ejektoreinlass (8) und dem zweiten Ejektoreinlass (9) steht,
wobei der erste Ejektoreinlass (8) mit dem Eduktorauslass (6) verbunden ist und einen Durchgang für den Fluidstrom von dem Venturi-Eduktor (2) in und durch den Venturi-Ejektor (7) bildet.

2. Das System nach Anspruch 1, wobei der erste Ejektoreinlass (8) direkt mit dem Eduktorauslass (6) verbunden ist, und/oder
wobei die Längsachsen (A) des Eduktors (2) und des Ejektors (7) koaxial ausgerichtet sind.

3. Das System nach Anspruch 1 oder Anspruch 2, wobei der erste Eduktoreinlass (3) auf der Längsachse (A) des Eduktors (2) zentriert ist, wobei optional der Eduktorauslass (6) koaxial mit dem ersten Eduktoreinlass (3) ausgerichtet ist.

4. Das System nach einem der vorhergehenden Ansprüche, wobei der erste Ejektoreinlass (8) auf der Längsachse (A) des Ejektors zentriert ist, und wobei der Ejektorauslass (11) optional koaxial mit dem ersten Ejektoreinlass (8) ausgerichtet ist.

5. Das System nach einem der vorhergehenden Ansprüche, wobei das Belüftungsmittel eine Vakuumkammer (16) umfasst oder
wobei das Belüftungsmittel einen Gasauslass (14) umfasst, der optional ein Ventil (15) umfasst.

6. Das System nach einem der vorhergehenden Ansprüche, das ferner ein äußeres Gehäuse (18) umfasst, das die Vorrichtung (1) umschließt, und/oder eine Gaseinlassleitung (21), die in Fluidverbindung mit dem zweiten Ejektoreinlass (9) steht.

7. Das System nach einem der vorhergehenden Ansprüche, das ferner eine oder mehrere der folgenden Komponenten umfasst: eine erste Flüssigkeitseinlassleitung (19), die in Fluidverbindung mit dem ersten Eduktoreinlass (3) steht; eine zweite Flüssigkeitseinlassleitung (20), die in Fluidverbindung mit dem zweiten Eduktoreinlass (5) steht, und eine Flüssigkeitsauslassleitung (22), die in Fluidverbindung mit dem Ejektorauslass (11) steht, optional wobei das System ferner einen Sauerstoffkonus (26) umfasst, der in Fluidverbindung mit der ersten Flüssigkeitseinlassleitung (19) und/oder der Flüssigkeitsauslassleitung (22) steht.

8. Das System nach einem der vorhergehenden Ansprüche, wobei die Vorrichtung (1) im Gebrauch vertikal entlang der Längsachse (A) ausgerichtet ist, wobei die Vorrichtung (1) optional so ausgerichtet ist, dass der erste Eduktoreinlass (3) unterhalb des Ejektorauslasses (11) liegt.

9. Das System nach einem der vorhergehenden Ansprüche, wobei das System (13) eine Vielzahl von Vorrichtungen(1) umfasst, die in Reihe und/oder parallel geschaltet sind.

10. Eine Aquafarm (24) mit mindestens einem Tank (25) und mindestens einem Flüssigkeitsbehandlungssystem (13) nach einem der Ansprüche 1 bis 9 in Fluidverbindung mit dem Tank (25).

11. Die Aquafarm nach Anspruch 10, wobei der Tank (25) in Fluidverbindung mit dem zweiten Eduktoreinlass (5) und dem Ejektorauslass (11) steht.

12. Die Aquafarm nach Anspruch 10 oder Anspruch 11, wobei jeder Tank (25) mindestens ein Flüssigkeitsbehandlungssystem (13) umfasst oder wobei jedes Flüssigkeitsbehandlungssystem (13) mit mehreren Tanks (25) in Fluidverbindung steht.

13. Die Aquafarm nach einem der Ansprüche 10 bis 12, wobei die Aquafarm (24) eine Fischfarm ist.

14. Verwendung eines Flüssigkeitsbehandlungssystems (13) nach einem der Ansprüche 1 bis 9 zur Behandlung einer Flüssigkeit.

15. Ein Verfahren zur Behandlung von Flüssigkeit in einem Tank (25), das die folgenden Schritte umfasst:
a. Bereitstellen eines Flüssigkeitsbehandlungssystems (13) nach einem der Ansprüche 1 bis 9;
b. Fließen von Flüssigkeit von einer Flüssigkeitsquelle (28) in den ersten Eduktoreinlass (3), wobei der Druck der Flüssigkeit von der Flüssigkeitsquelle (28) größer ist als der Druck der Flüssigkeit im Inneren des Tanks (25);
c. Mitreißen von Flüssigkeit aus dem Tank (25) in den zweiten Einlass des Eduktors (5);
d. Mitreißen von Luft aus einer Luftquelle (30) in den zweiten Ejektoreinlass (9) und
e. Fließen von Flüssigkeit aus dem Ejektorauslass (11) in den Tank (25).

## Revendications

1. Un système de traitement des liquides (13), comprenant un appareil de type venturi à plusieurs étages (1) et un dispositif de ventilation (14,16) permettant de libérer le gaz de l'appareil, l'appareil de type venturi à plusieurs étages (1) comprenant un éjecteur de type venturi (2) présentant un axe longitudinal (A), une première entrée d'éjecteur (3) configurée pour recevoir un flux liquide, une deuxième entrée d'éjecteur (5) configurée pour recevoir un flux liquide et une sortie d'éjecteur (6) en communication fluidique avec la première entrée d'éjecteur (3) et la deuxième entrée d'éjecteur (5) ; et
un éjecteur de type venturi (7) présentant un axe longitudinal (A), une première entrée d'éjecteur (8), une deuxième entrée d'éjecteur (9) configurée pour recevoir un flux gazeux et une sortie d'éjecteur (11) en communication fluidique avec la première entrée d'éjecteur (8) et la deuxième entrée d'éjecteur (9),
dans lequel la première entrée d'éjecteur (8) est reliée à la sortie d'éjecteur (6) de sorte à former un passage pour le flux de fluide depuis l'éjecteur de type venturi (2) dans et à travers l'éjecteur de type venturi (7).

2. Le système de la revendication 1, dans lequel la première entrée d'éjecteur (8) est directement reliée à la sortie d'éjecteur (6) ; et/ou
dans lequel les axes longitudinaux (A) de l'éjecteur (2) et de l'éjecteur (7) sont alignés de manière coaxiale.

3. Le système de la revendication 1 ou 2, dans lequel la première entrée d'éjecteur (3) est centrée sur l'axe longitudinal (A) de l'éjecteur (2), éventuellement dans lequel la sortie d'éjecteur (6) est alignée de manière coaxiale sur la première entrée d'éjecteur (3).

4. Le système de l'une des revendications précédentes, dans lequel la première entrée d'éjecteur (8) est centrée sur l'axe longitudinal (A) de l'éjecteur, éventuellement dans lequel la sortie d'éjecteur (11) est alignée de manière coaxiale sur la première entrée d'éjecteur (8).

5. Le système de l'une des revendications précédentes, dans lequel le dispositif de ventilation comprend une chambre à vide (16) ; ou
dans lequel le dispositif de ventilation comprend une sortie de gaz (14), comprenant éventuellement une soupape (15).

6. Le système de l'une des revendications précédentes, comprenant en outre une enveloppe extérieure (18) renfermant l'appareil (1) et/ou un conduit d'entrée de gaz (21) en communication fluidique avec la deuxième entrée d'éjecteur (9).

7. Le système de l'une des revendications précédentes, comprenant en outre un ou plusieurs des éléments suivants : un premier conduit d'entrée de liquide (19) en communication fluidique avec la première entrée d'éjecteur (3), un deuxième conduit d'entrée de liquide (20) en communication fluidique avec la deuxième entrée d'éjecteur (5) et un conduit de sortie de liquide (22) en communication fluidique avec la sortie d'éjecteur (11), éventuellement
dans lequel le système comprend en outre un cône d'oxygène (26) en communication fluidique avec le premier conduit d'entrée de liquide (19) et/ou le conduit de sortie de liquide (22).

8. Le système de l'une des revendications précédentes, dans lequel, dans le cadre de l'utilisation, l'appareil (1) est orienté verticalement le long de l'axe longitudinal (A), éventuellement dans lequel l'appareil (1) est orienté de sorte que la première entrée d'éjecteur (3) se trouve sous la sortie d'éjecteur (11).

9. Le système de l'une des revendications précédentes, dans lequel le système (13) comprend plusieurs appareils (1) connectés en série et/ou en parallèle.

10. Une ferme aquacole (24) comprenant au moins un réservoir (25) et au moins un système de traitement des liquides (13) de l'une des revendications 1 à 9 en communication fluidique avec le réservoir (25).

11. La ferme aquacole de la revendication 10, dans laquelle le réservoir (25) est en communication fluidique avec la deuxième entrée d'éjecteur (5) et la sortie d'éjecteur (11).

12. La ferme aquacole de la revendication 10 ou 11, dans laquelle chaque réservoir (25) comprend au moins un système de traitement des liquides (13) ou dans laquelle chaque système de traitement des liquides (13) est en communication fluidique avec plusieurs réservoirs (25).

13. La ferme aquacole de l'une des revendications 10 à 12, dans laquelle la ferme aquacole (24) est une ferme piscicole.

14. L'utilisation d'un système de traitement des liquides (13) de l'une des revendications 1 à 9 pour traiter un liquide.

15. Un procédé de traitement des liquides dans un réservoir (25), comprenant les étapes consistant à :
a. fournir le système de traitement des liquides (13) de l'une des revendications 1 à 9 ;
b. faire s'écouler le liquide provenant d'une source de liquide (28) dans la première entrée d'éjecteur (3), la pression du liquide provenant de la source de liquide (28) étant supérieure à la pression du liquide à l'intérieur du réservoir (25) ;
c. entraîner le liquide provenant du réservoir (25) dans la deuxième entrée d'éjecteur (5) ;
d. entraîner l'air provenant d'une source d'air (30) dans la deuxième entrée d'éjecteur (9) ; et à
e. faire s'écouler le liquide provenant de la sortie d'éjecteur (11) vers le réservoir (25).
